# EUROPEAN PATENT APPLICATION

(11) **EP 1 340 800 A1**
(43) Date of publication of application: **03.09.2003**
(21) Application number: 01974791.4
(22) Date of filing: 11.10.2001
(51) Int. Cl.: C10L 1/06, B60K 1/04

(54) **DUAL PURPOSE FUEL FOR GASOLINE-DRIVEN AUTOMOBILE AND FUEL CELL SYSTEM, AND SYSTEM FOR STORAGE AND/OR SUPPLY THEREOF**

(30) Priority: 11.10.2000 JP 2000310315
(71) Applicant: Nippon Oil Corporation, Tokyo 105-8412 (JP)
(72) Inventor: SAITOU, Kenichirou NIPPON OIL CORPORATION, Yokohama-shi Kanagawa 231-0815 (JP); NAGAO, Masaki NIPPON OIL CORPORATION, Yokohama-shi Kanagawa 231-0815 (JP); SADAKANE, Osamu NIPPON OIL CORPORATION, Yokohama-shi Kanagawa 231-0815 (JP); OYAMA, Koji NIPPON OIL CORPORATION, Yokohama-shi Kanagawa 231-0815 (JP)
(74) Representative: Modiano, Guido, Dr.-Ing.
(86) International application number: JP0108938
(87) International publication number: WO02031090

(57) **Abstract**

The present invention provides a dual purpose fuel suitable for an automotive spark ignition (SI) engine and a fuel cell system and also provides a storage and/or supply system of said dual purpose fuel.

A dual purpose fuel for use in both an automotive spark ignition (SI) engine and a fuel cell system wherein said fuel comprises hydrocarbons of 50ppm by mass or less of sulfur content; 30 vol.% or more of saturates; 50 vol.% or less of aromatics; and 35 vol.% or less of olefins; wherein the ratio of paraffin in said saturates is 60 vol.% or more; the ratio of branched paraffin in said paraffin is 70 vol.% or more; the density of said hydrocarbons is 0.78 g/cm³ or less; the initial boiling point in distillation is 24 °C or higher and 80 °C or lower, the 50 vol.% distillation temperature (T₅₀) is 60 °C or higher and 120 °C or lower, the 90 vol.% distillation temperature (T₉₀) is 100 °C or higher and 190 °C or lower, the final boiling point in distillation is 130 °C or higher and 230 °C or lower; the Reid vapor pressure of said hydrocarbons is 10kPa or more and less than 100kPa; and the research octane number of said hydrocarbons is 89.0 or more, and a storage and/or supply system of said dual purpose fuel, wherein said dual purpose fuel is stored in a fuel storage apparatus for an automotive spark ignition (SI) engine, and fed, as demanded, to the automotive spark ignition (SI) engine or to the fuel cell system from the fuel storage apparatus.

## Description

### TECHNICAL FIELD

The present invention relates to a dual purpose fuel for use in both an automotive spark ignition (SI) engine and a fuel cell system. The present invention also relates to a storage and/or supply system of said dual purpose fuel.

### BACKGROUND ART

Recently, with increasing awareness of the critical situation of future global environments, it has been highly expected to develop an energy supply system harmless to the global environments. Especially urgently required are to reduce CO₂ to prevent global warming and reduce harmful emissions such as THC (unreacted hydrocarbons in an exhaust gas), NO_{X}, PM (particulate matter in an exhaust gas: soot, unburned high boiling point and high molecular weight fuel and lubricating oil). Practical examples of such a system are an automotive power system to replace a conventional Otto/Diesel engine and a power generation system to replace thermal power generation.

Hence, a fuel cell, which has high energy efficiency and emits only H₂O and CO₂, has been regarded as a most expectative system to respond to social requests. In order to achieve such a system, it is necessary to develop not only the hardware but also the optimum fuel.

Conventionally, as a fuel for a fuel cell system, hydrogen, methanol, and hydrocarbons have been candidates.

As a fuel for a fuel cell system, hydrogen is advantageous in a point that it does not require a reformer, however, because of a gas phase at a normal temperature, it has difficulties in storage and loading in a vehicle and special facilities are required for its supply. Further, the risk of inflammation is high and therefore, it has to be handled carefully.

Methanol is advantageous in a point that it is relatively easy to reform, however power generation quantity per weight is low and owing to its toxicity, handling has to be careful. Further, it has a corrosive property, special facilities are required for its storage and supply.

The hydrocarbon-based fuel is excellent in storability and can easily be mounted on a vehicle, etc. In particular, since the hydrocarbon-based fuel can be supplied by making use of the existing service stations, the use of the hydrocarbon-based fuel is deemed very advantageous in terms of infrastructure. However, since the conventional gasoline includes sulfur content and additives, and these sulfur content and additives are considered to give bad influences on the catalyst to be used in the reforming reaction in a fuel cell or on the electrodes of the fuel cell (in particular, proton exchange membrane type fuel cell), it has been considered impossible to use the conventional gasoline as a fuel for the fuel cell.

Like this, a dual purpose fuel for use in both an automotive spark ignition (SI) engine and a fuel cell system has not yet been developed. In order to sufficiently utilize the performances for use in an automotive spark ignition (SI) engine and a fuel cell system, as a fuel for a fuel cell system, the following are required: power generation quantity per weight is high; power generation quantity per CO₂ emission is high; a fuel consumption is low in a fuel cell system as a whole; deterioration of a fuel cell system comprising such as a reforming catalyst, a water gas shift reaction catalyst, a carbon monoxide conversion catalyst, fuel cell stacks and the like is scarce to keep the initial performances for a long duration; a starting time for the system is short; and storage stability and handling easiness are excellent.

Incidentally, in a fuel cell system, it is required to keep a fuel and a reforming catalyst at a proper temperature, the net power generation quantity of the entire fuel cell system is equivalent to the value calculated by subtracting the energy necessary for keeping the temperature (the energy for keeping balance endothermic and exothermic reaction following the preheating energy) from the actual power generation quantity. Consequently, if the temperature for the reforming is lower, the energy for preheating is low and that is therefore advantageous and further the system starting time is advantageously shortened. In addition, it is also necessary that the energy for preheating per fuel weight is low. If the preheating is insufficient, unreacted hydrocarbon (THC) in an exhaust gas increases and it results in not only decrease of the power generation quantity per weight but also possibility of becoming causes of air pollution. To say conversely, when some kind of fuels are reformed by the same reformer and the same temperature, it is more advantageous that THC in an exhaust gas is lower and the conversion efficiency to hydrogen is higher.

In the meantime, in the existing service stations and oil terminals, there are disposed a plurality of fuel storage tanks which are respectively designed to be filled with a specific kind of fuel product such as high-octane gasoline, regular gasoline, gas oil, kerosene, etc. Therefore, if it is desired to additionally deal with a hydrocarbon-based fuel to be used for the fuel cell, an additional tank to be exclusively designed for storing this hydrocarbon-based fuel is required to be installed in the service stations or the oil terminals, thus necessitating the rearrangement more or less in terms of infrastructure if the aforementioned existing fuel products are also to be concurrently dealt with by the same service stations or oil terminals.

The present invention, taking such situation into consideration, aims to provide a dual purpose fuel for use in both an automotive spark ignition (SI) engine and a fuel cell system satisfying the above-described requirements in good balance. The present invention also aims to provide a storage and/or supply system of said dual purpose fuel.

### DISCLOSURE OF THE INVENTION

Inventors of the present invention have extensively investigated to solve the above-described problems and found that a fuel comprising hydrocarbon compounds with specific compositions and properties is suitable for a dual purpose fuel for an automotive spark ignition (SI) engine and a fuel cell system.

That is, the dual purpose fuel for an automotive spark ignition (SI) engine and a fuel cell system according to the present invention comprises:
(1) hydrocarbons comprising 50ppm by mass or less of sulfur content; 30 vol.% or more of saturates; 50 vol.% or less of aromatics; and 35 vol.% or less of olefins; wherein the ratio of paraffin in said saturates is 60 vol.% or more; the ratio of branched paraffin in said paraffin is 70 vol.% or more; the density of said hydrocarbons is 0.78 g/cm³ or less; the initial boiling point in distillation is 24 °C or higher and 80 °C or lower, the 50 vol.% distillation temperature (T₅₀) is 60 °C or higher and 120 °C or lower, the 90 vol.% distillation temperature (T₉₀) is 100 °C or higher and 190 °C or lower, the final boiling point in distillation is 130 °C or higher and 230 °C or lower; the Reid vapor pressure of said hydrocarbons is 10kPa or more and less than 100kPa; and the research octane number of said hydrocarbons is 89.0 or more.

It is more preferable that the fuel comprising the aforementioned specific composition and properties is formulated so as to satisfy the following additional requirements:
(2) the fuel exhibits total weighted demerits (TWD) of 40 or less based on the driveability assessment method at the intermediate temperature of CRC;
(3) a content of hydrocarbon compounds having four carbon atoms is 15 vol.% or less, a content of hydrocarbon compounds having five carbon atoms is 5 vol.% or more, a content of hydrocarbon compounds having six carbon atoms is 5 vol.% or more, a total content of hydrocarbon compounds having seven and eight carbon atoms is 20 vol.% or more, and a total content of hydrocarbon compounds having ten or more carbon atoms is 20 vol.% or less;
(4) heat capacity of the fuel is 2.6 kJ/kg °C or less at 15 °C and 1 atm in liquid phase;
(5) heat of vaporization is 400 kJ/kg or less;
(6) oxidation stability of the fuel is 240 minutes or longer.

Further, the storage and/or supply system of said dual purpose fuel for an automotive spark ignition (SI) engine and a fuel cell system according to the present invention is featured in that:
(7) the dual purpose fuel which is defined in any one of the aforementioned items (1) to (6) is stored in a fuel storage apparatus for an automotive spark ignition (SI) engine, and fed, as demanded, to the automotive spark ignition (SI) engine or to the fuel cell system from this fuel storage apparatus.

Further, the storage and/or supply system may be constructed so as to satisfy the following additional requirements:
(8) the fuel storage apparatus for an automotive spark ignition (SI) engine is formed of the existing storage apparatus for storing high-octane gasoline or regular gasoline.

### BRIEF DESCRIPTION OF THE DRAWINGS

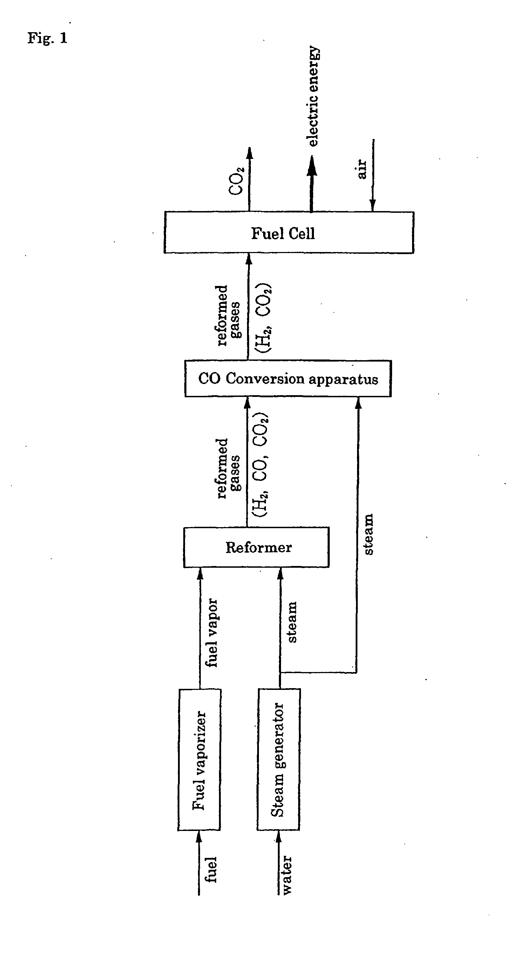

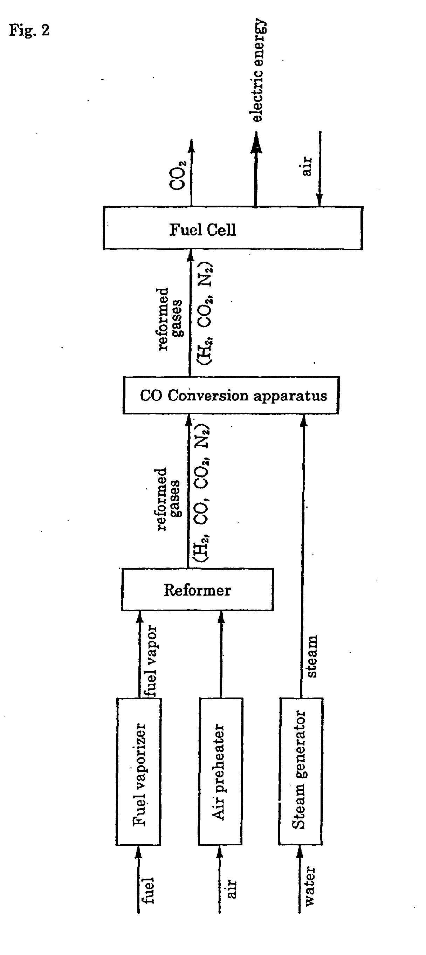

Fig. 1 shows a flow chart of a steam reforming type fuel cell system used for evaluation of a dual purpose fuel for an automotive spark ignition (SI) engine and a fuel cell system of the invention. Fig. 2 is a flow chart of a partial oxidation type fuel cell system used for evaluation of a dual purpose fuel for an automotive spark ignition (SI) engine and a fuel cell system of the invention.

### BEST MODE FOR CARRYING OUT THE INVENTION

Hereinafter, the contents of the invention will be described further in detail.

In the present invention, the hydrocarbon compounds with specific compositions and properties are as follows.

The content of sulfur in a dual purpose fuel for an automotive spark ignition (SI) engine and a fuel cell system of the invention is, when used in a fuel for a fuel cell system, 50 ppm by mass or less, more preferably 30 ppm by mass or less, more preferably 10 ppm by mass or less, further more preferably 1 ppm by mass or less, and most preferably 0.1 ppm by mass or less, because deterioration of a fuel cell system comprising such as a reforming catalyst, a water gas shift reaction catalyst, a carbon monoxide removal catalyst, fuel cell stacks, and the like can be suppressed to low and the initial performances can be maintained for a long duration.

Here, sulfur means sulfur measured by JIS K 2541, "Crude Oil and Petroleum Products-Determination of sulfur content", in case of 1 ppm by mass or more and means sulfur measured by ASTM D4045-96, "Standard Test Method for Sulfur in Petroleum Products by Hydrogenolysis and Rateometric Colorimetry" in the case of less than 1 ppm by mass.

In the dual purpose fuel for an automotive spark ignition (SI) engine and a fuel cell system of the invention, with respect to the respective contents of saturates, aromatics and olefins, the saturates (V (S)) is 30 vol.% or more, aromatics (V (Ar)) is 50 vol.% or less and olefins (V (O)) is 35 vol.% or less, respectively. Hereinafter, these compounds will separately be described.

In view of a high power generation quantity per weight, a high power generation quantity per CO₂ emission, a low fuel consumption of a fuel cell system as a whole, small THC in an exhaust gas, and a short starting time of the system, when used in a fuel for a fuel cell system, and in view of preventing the coking of gasoline inside the injector, minimizing the smoking of the plugs, inhibiting the generation of ozone from the exhaust gas, and preventing the generation of soot, when used in an automotive spark ignition (SI) engine, V (S) is 30 vol.% or more, preferably 40 vol.% or more, more preferably 50 vol.% or more, further more preferably 60 vol.% or more, much more preferably 70 vol.% or more, much further more preferably 80 vol.% or more, still further more preferably 90 vol.% or more, and most preferably 95 vol.% or more.

In view of a high power generation quantity per weight, a high power generation quantity per CO₂ emission, a low fuel consumption of a fuel cell system as a whole, small deterioration of a reforming catalyst to maintain the initial performances for a long duration, small THC in an exhaust gas, and a short starting time of the system, when used in a fuel for a fuel cell system, and in view of preventing the coking of gasoline inside the injector, minimizing the smoking of the plugs, inhibiting the generation of ozone from the exhaust gas, and preventing the generation of soot, when used in an automotive spark ignition (SI) engine, V (Ar) is 50 vol.% or less, preferably 45 vol.% or less, more preferably 40 vol.% or less, further more preferably 35 vol.% or less, much more preferably 30 vol.% or less, much further more preferably 20 vol.% or less, still further more preferably 10 vol.% or less, and most preferably 5 vol.% or less.

In the dual purpose fuel for an automotive spark ignition (SI) engine and a fuel cell system of the invention, it is most preferable to satisfy the above-described preferable ranges of sulfur and aromatics since deterioration of a reforming catalyst can be suppressed to low and the initial performances can be maintained for a long duration.

In view of a high power generation quantity per weight, a high power generation quantity per CO₂ emission, a low fuel consumption of a fuel cell system as a whole, small deterioration of a reforming catalyst to maintain the initial performances for a long duration and a good storage stability, when used in a fuel for a fuel cell system, and in view of preventing the coking of gasoline inside the injector, minimizing the smoking of the plugs, inhibiting the generation of ozone from the exhaust gas, minimizing the benzene concentration in the exhaust gas, and preventing the generation of soot, when used in an automotive spark ignition (SI) engine, V (O) is 35 vol.% or less, preferably 25 vol.% or less, more preferably 20 vol.% or less, further more preferably 15 vol.% or less, and most preferably 10 vol.% or less.

The values of the above-described V (S), V (O), and V (Ar) are all measured value according to the fluorescent indicator adsorption method of JIS K 2536, "Liquid petroleum products-Testing method of components".

Further, in the dual purpose fuel for an automotive spark ignition (SI) engine and a fuel cell system of the invention, in view of a high power generation quantity per weight, a high power generation quantity per CO₂ emission and the like, the ratio of paraffins in saturates of a fuel is 60 vol.% or more, preferably 65 vol.% or more, more preferably 70 vol.% or more, further more preferably 75 vol.% or more, much more preferably 80 vol.% or more, much further more preferably 85 vol.% or more, particularly preferably 90 vol.% or more, and most preferably 95 vol.% or more.

Further, in view of a high power generation quantity per weight, a high power generation quantity per CO₂ emission, a low fuel consumption of a fuel cell system as a whole, small THC in an exhaust gas, and a short starting time of the system, when used in a fuel for a fuel cell system, and in view of improving the octane value, when used in an automotive spark ignition (SI) engine, the ratio of branched paraffins in the above-described paraffins is 70 vol.% or more, preferably 75 vol.% or more, and most preferably 80 vol.% or more.

The above-described saturates and paraffins are values quantitatively measured by the following gas chromatography. That is, the values are measured in conditions: using capillary columns of methyl silicon for columns; using helium or nitrogen as a carrier gas; a hydrogen ionization detector (FID) as a detector; the column length of 25 to 50 m; the carrier gas flow rate of 0.5 to 1.5 ml/min, the split ratio of (1 : 50) to (1 : 250); the injection inlet temperature of 150 to 250 °C; the initial column temperature of -10 to 10 °C; the final column temperature of 150 to 250 °C, and the detector temperature of 150 to 250 °C.

Further, in the dual purpose fuel for an automotive spark ignition (SI) engine and a fuel cell system of the invention, in view of a high power generation quantity per weight, a low fuel consumption of a fuel cell system as a whole, small THC in an exhaust gas, and a short starting time of the system, when used in a fuel for a fuel cell system, the density of a fuel is 0.78 g/cm³ or less. Here, the density means the density measured according to JIS K 2249, "Crude petroleum and petroleum products-Determination of density and petroleum measurement tables based on a reference temperature (15°C)".

The dual purpose fuel for an automotive spark ignition (SI) engine and a fuel cell system of the invention has initial boiling point (initial boiling point 0) in distillation of 24 °C or higher and 80 °C or lower, preferably 24 °C or higher and 50 °C or lower. The 50 vol.% distillation temperature (T₅₀) is 60 °C or higher and 120 °C or lower, preferably 75 °C or higher and 110 °C or lower, and more preferably 78 °C or higher and 100 °C or lower. The 90 vol.% distillation temperature (T₉₀) is 100 °C or higher and 190 °C or lower and preferably 100 °C or lower and 170 °C or lower. The final boiling point in distillation is 130 °C or higher and 230 °C or lower and preferably 130 °C or higher and 220 °C or lower.

If the initial boiling point (initial boiling point 0) in distillation is low, when used in a fuel for a fuel cell system, the fuel is highly inflammable and an evaporative gas (THC) is easy to be generated and there is a problem to handle the fuel, and when used in an automotive spark ignition (SI) engine, there is a possibility to deteriorate driving performance at a high temperature.

Similarly regarding to the 50 vol.% distillation temperature (T₅₀), if it is less than the above-described restricted value, when used in a fuel for a fuel cell system, the fuel is highly inflammable and an evaporative gas (THC) is easy to be generated and there is a problem to handle the fuel, and when used in an automotive spark ignition (SI) engine, there is a possibility to cause troubles in driving performance.

On the other hand, the 90 vol.% distillation temperature (T₉₀) and the final boiling point in distillation are determined, when used in a fuel for a fuel cell system, in view of a high power generation quantity per weight, a high power generation quantity per CO₂ emission, a low fuel consumption of a fuel cell system as a whole, a low THC in an exhaust gas, short starting time of a system, and the like. When used in an automotive spark ignition (SI) engine, if the 90 vol.% distillation temperature (T₉₀) and the final boiling point in distillation are high, there are possibilities to deteriorate driving performance and to increase the exhaust gases. Further, the 90 vol.% distillation temperature (T₉₀) and the final boiling point in distillation are also determined in view of diluting engine oils by gasoline and inhibiting generation of sludge.

Incidentally, the above-described initial boiling point (initial boiling point 0) in distillation, the 50 vol.% distillation temperature (T₅₀), the 90 vol.% distillation temperature (T₉₀), and the final boiling point in distillation are distillation properties measured by JIS K 2254, "Petroleum products-Determination of distillation characteristics".

Further, in the dual purpose fuel for an automotive spark ignition (SI) engine and a fuel cell system of the invention, when used in a fuel for a fuel cell system, in view of a high power generation quantity per weight, a low fuel consumption of a fuel cell system as a whole, and the like, and when used in an automotive spark ignition (SI) engine, although the vapor pressure is not particularly restricted, in view of preventing the coking of gasoline inside the injector, minimizing the amounts of evaporating gas (evapo-emission), and being convenient to handle in the flashing point and the like, the Reid vapor pressure (RVP) of a fuel is 10 kPa or more and less than 100 kPa, preferably 20 kPa or more and less than 90 kPa, more preferably 50 kPa or more and less than 75 kPa.

Here, the Reid vapor pressure (RVP) means the vapor pressure (Reid vapor pressure (RVP)) measured by JIS K 2258, "Testing Method for Vapor Pressure of Crude Oil and Products (Reid Method)".

Further, in the dual purpose fuel for an automotive spark ignition (SI) engine and a fuel cell system of the invention, the research octane number (RON, the octane number by research method) is 89.0 or more in view of enhancing anti-knocking property, when used in an automotive spark ignition (SI) engine. Here, the octane number by research method (RON) means the research method octane number measured by JIS K 2280, "Petroleum products-Fuels-Determination of octane number, cetane number and calculation of cetane number index".

Further, in the dual purpose fuel for an automotive spark ignition (SI) engine and a fuel cell system of the invention, with respect to the assessment as a fuel for an automotive spark ignition (SI) engine, the total weighted demerits (TWD) based on the assessment method for driveability at the intermediate temperature (25°C) of CRC should preferably be 40 or less, more preferably 30 or less.

By the way, the assessment method for driveability of CRC used herein is a method wherein an automobile is driven in accordance with the driving pattern based on the CRC method described in "CRC Report No. 483", and the driveability of the fuel is assessed. The total weighted demerits (TWD) are determined in such a manner that, based on a demerit score to be given to any one of the phenomena described in the demerit items shown in Table 1 by referring to the malfunction severity ratings described in Table 2 and also based on a factor prescribed for each of the demerit items which are described in Table 3, a value of "the demerit score" x "the factor" is calculated. This calculation is performed on all of the items stipulated therein, and all of the results are finally summarized, thus evaluating the driveability of the fuel. The higher the TWD is, the larger the problems to be encountered as the fuel is actually used as gasoline.

**Table 1**

| [Demerit items and the definition terms] | |
|---|---|
| Demerit items | Definition of terms |
| Start Time | Start-up the engine using manufacturers recommended throttle position, timed in seconds from initial starter engagement to engine firing. |
| Idle Roughness | Any evaluation of a degree of vehicle smoothness while the engine is idling. |
| Stall | Any occasion during a test that the engine stops with the ignition on. |
| Stumble | A short, sharp reduction in acceleration rate experienced under acceleration |
| Surge | A continued or transient condition of fluctuations in power, experienced as changes in acceleration rate which are short or long, cyclic or random, and occurring at any speed and/or load. |
| Hesitation | A temporary lack of initial response to changes of throttle position to increase acceleration rate. |
| Backfire | An explosion in the induction or exhaust system. |

**Table 2**

| [Demerit Score] | | |
|---|---|---|
| | Malfunction Severity Ratings | Score |
| Trace | A level of malfunction severity that is only discernible to a test driver. | 1 |
| Moderate | A level of malfunction severity judged by a rater to be probably noticeable to the average driver. | 2 |
| Heavy | A level of malfunction severity that is pronounced and judged to be obvious to any driver. | 4 |

**Table 3**

| [Factor when any defectiveness is found in assessed demerit items] | |
|---|---|
| Demerit items | Factor |
| Start time and idle roughness | 1 |
| Surge | 4 |
| Stumble, hesitation and backfire | 6 |
| Stall (during idling) | 8 |
| Stall (during driving) | 32 |

Further, the amounts of hydrocarbon compounds having carbon numbers of 4, 5 and 6 used in the invention are not particularly restricted, however, the following compounds are preferable.

The content of hydrocarbon compounds having a carbon number of 4 (V (C₄)) shows the content of hydrocarbon compounds having 4 carbon atoms on the basis of the whole fuel and is required to be 15 vol.% or less in view of the evaporative gas (evapo-emission) can be suppressed to low and the handling property is good in respect of inflammability or the like and preferably 10 vol.% or less.

The content of hydrocarbon compounds having a carbon number of 5 (V (C₅)) shows the content of hydrocarbon compounds having 5 carbon atoms on the basis of the whole fuel and is required to be 5 vol.% or more in view of a high power generation quantity per weight, a high power generation quantity per CO₂ emission, and a low fuel consumption of a fuel cell system as a whole and preferably 10 vol.% or more, more preferably 15 vol.% or more, further more preferably 20 vol.% or more.

The content of hydrocarbon compounds having a carbon number of 6 (V (C₆)) shows the content of hydrocarbon compounds having 6 carbon atoms on the basis of the whole fuel and is required to be 5 vol.% or more in view of a high power generation quantity per weight, a high power generation quantity per CO₂ emission, and a low fuel consumption of a fuel cell system as a whole and preferably 10 vol.% or more, more preferably 15 vol.% or more, further more preferably 20 vol.% or more.

The content of hydrocarbon compounds having carbon numbers of 7 and 8 (V (C₇ + C₈)) in total shows the content of hydrocarbon compounds having 7 carbon atoms and 8 carbon atoms in total on the basis of the whole fuel and is required to be 20 vol.% or more in view of a high power generation quantity per weight, a high power generation quantity per CO₂ emission, and a low fuel consumption of a fuel cell system as a whole and preferably 25 vol.% or more, more preferably 35 vol.% or more, and further more preferably 40 vol.% or more.

Further, in the invention, the content of hydrocarbons having carbon numbers of 10 or more is not particularly restricted, however, in view of a high power generation quantity per CO₂ emission, a low fuel consumption of a fuel cell system as a whole, and small deterioration of a reforming catalyst to maintain initial performances for a long duration, the total content of hydrocarbon compounds having carbon numbers of 10 or more (V (C₁₀₊)) on the basis of the whole fuel is preferably 20 vol.% or less, more preferably 15 vol.% or less, further more preferably 10 vol.% or less.

Incidentally, the above-described V (C₄), V (C₅), V (C₆), V (C₇ + C₈), and V (C₁₀₊) are values quantitatively measured by the following gas chromatography. That is, these values are measured in conditions: using capillary columns of methyl silicon for columns; using helium or nitrogen as a carrier gas; using a hydrogen ionization detector (FID) as a detector; the column length of 25 to 50 m; the carrier gas flow rate of 0.5 to 1.5 ml/min, the split ratio of (1 : 50) to (1 : 250); the injection inlet temperature of 150 to 250 °C; the initial column temperature of -10 to 10 °C; the final column temperature of 150 to 250 °C, and the detector temperature of 150 to 250 °C.

Further, in the dual purpose fuel for an automotive spark ignition (SI) engine and a fuel cell system of the invention, the heat capacity of a fuel is not particularly restricted, however, the heat capacity is preferably 2.6 kJ/kg · °C or less at 15 °C and 1 atm in liquid phase in view of a low fuel consumption of a fuel cell system as a whole.

Further, in the dual purpose fuel for an automotive spark ignition (SI) engine and a fuel cell system of the invention, the heat of vaporization of a fuel is not particularly restricted, the heat of vaporization is preferably 400 kJ/kg or less because of a low fuel consumption of a fuel cell system as a whole.

Those heat capacity and heat of vaporization can be calculated from the contents of respective components quantitatively measured by the above-described gas chromatography and the numeric values per unit weight of the respective components disclosed in "Technical Data Book-Petroleum Refining", Vol. 1, Chap. 1, General Data, Table 1C1.

Further, in the dual purpose fuel for an automotive spark ignition (SI) engine and a fuel cell system of the invention, the oxidation stability of a fuel is not particularly restricted, however, it is preferably 240 minutes or longer in view of storage stability. Here, the oxidation stability is the oxidation stability measured according to JIS K 2287, "Testing Method for Oxidation Stability of Gasoline (Induction Period Method)".

A production method of the dual purpose fuel for an automotive spark ignition (SI) engine and a fuel cell system of the invention is not particularly restricted. As a practical method, for example, the fuel can be prepared by blending one or more following hydrocarbon base materials; desulfurized whole-range naphtha obtained by desulfurization of naphtha fraction obtained by the atmospheric distillation of crude oil, desulfurized light naphtha, which is light fractions, obtained by further distillation of the desulfurized whole-range naphtha, desulfurized heavy naphtha, which is heavy fractions, obtained by further distillation of the desulfurized whole-range naphtha, light distillate of reformate, which is light fractions, obtained by further distillation of reformate obtained by reforming the desulfurized heavy naphtha, middle to heavy distillate of reformate, which is middle to heavy distillate fractions, obtained by further distillation of reformate obtained by reforming the desulfurized heavy naphtha, heavy distillate of reformate, which is heavy distillate fractions, obtained by further distillation of reformate obtained by reforming the desulfurized heavy naphtha, sulfolane-raffinate which is residue after extraction of aromatics by subjecting middle to heavy distillate of reformate to the sulfolane process, catalytic cracked gasoline obtained by subjecting heavy oil to the fluid catalytic cracking process, light catalytic cracked gasoline, which is light fractions, obtained by distillation of the catalytic cracked gasoline, alkylate, which is gasoline fractions, obtained by subjecting butane-butene fractions to the alkylation process, desulfurized alkylate obtained by desulfurization of alkylate, low-sulfur alkylate based on desulfurized butane-butene, isomerate, which is gasoline fractions, obtained by subjecting the desulfurized heavy naphtha to the isomerization process, "GTL (Gas to Liquids)" naphtha, which is naphtha fractions of synthesis fuel, obtained by synthesis, cracking, isomerization or the like after cracking natural gas, coal or the like to carbon monoxide and hydrogen, LPG, desulfurized LPG obtained by desulfurizing LPG, MTBE, and the like. The fuel can also be produced by desulfurizing by hydrotreating or adsorption after mixing one or more types of the above base materials.

If sulfur content is desired to be further reduced in the aforementioned fuel, for example, if the sulfur content in the fuel is desired to be reduced to 50ppm by mass or less, especially when the sulfur content of the fuel to be obtained by the aforementioned method is required to be further reduced and especially when the fuel is a catalytic cracked gasoline, the sulfur content should be removed from the catalytic cracked gasoline by making use of a hydrodesulfurization process and the like. Alternatively, the sulfur content in crude oil of a fluid catalytic cracking process (FCC) for manufacturing the catalytic cracked gasoline should be reduced to a suitable degree as required. When the hydrodesulfurization process is to be used for the desulfurization, the ordinary hydrodesulfurization method used now in an oil refinery will lead to a decrease of octane value due to the concurrent generation of a hydrogenation reaction of olefin components. Therefore, it is more preferably to use a method which is capable of suppressing the lowering of the octane number as described for example in Japanese Patent Application Laid-Open Gazette (Unexamined Publication) No. H7-157774, U.S. Patent No.5,352,354 or U.S. Patent No.6,013,598.

Among them, preferable materials as the base materials for the production of the dual purpose fuel for an automotive spark ignition (SI) engine and a fuel cell system of the invention are desulfurized light naphtha, desulfurized whole-range naphtha, isomerate, alkylates, desulfurized alkylates obtained by desulfurizing alkylates, low sulfur alkylates based on desulfurized butane-butene fractions, sulfolane-raffinate, light catalytic cracked gasoline, light distillate of reformate, middle to heavy distillate of reformate, desulfurized light distillate of catalytic cracked gasoline obtained by desulfurizing a light distillate of catalytic cracked gasoline, GTL naphtha, LPG, desulfurized LPG obtained by desulfurizing LPG, MTBE and the like.

The dual purpose fuel of the invention may comprise additives such as dyes for identification, oxidation inhibitors for improvement of oxidation stability, metal deactivators, corrosion inhibitors for corrosion prevention, detergents for keeping cleanness of a fuel system, lubricity improvers for improvement of lubricating property and the like.

However, since a reforming catalyst is to be scarcely deteriorated and the initial performances are to be maintained for a long duration, the amount of dyes is preferably 10 ppm or less and more preferably 5 ppm or less. For the same reasons, the amount of oxidation inhibitors is preferably 300 ppm or less, more preferably 200 ppm or less, further more preferably 100 ppm or less, and most preferably 10 ppm or less. For the same reasons, the amount of metal deactivators is preferably 50 ppm or less, more preferably 30 ppm or less, further more preferably 10 ppm or less, and most preferably 5 ppm or less. Further, similarly since a reforming catalyst is to be scarcely deteriorated and the initial performances are to be maintained for a long duration, the amount of corrosion inhibitors is preferably 50 ppm or less, more preferably 30 ppm or less, further more preferably 10 ppm or less, and most preferably 5 ppm or less. For the same reasons, the amount of detergents is preferably 300 ppm or less, more preferably 200 ppm or less, and most preferably 100 ppm or less. For the same reasons, the amount of lubricity improvers is preferably 300 ppm or less, more preferably 200 ppm or less, and most preferably 100 ppm or less.

A fuel of the invention is to be used as a dual purpose fuel for an automotive spark ignition (SI) engine and a fuel cell system. As for the automotive spark ignition (SI) engine defined in the invention, a kind of automobile is not particularly restricted. Further, a fuel cell system mentioned herein comprises a reformer for a fuel, a carbon monoxide conversion apparatus, fuel cells and the like, however, a fuel of the invention may be suitable for any fuel cell system.

The reformer is an apparatus for obtaining hydrogen, by reforming a fuel. Practical examples of the reformer are:
(1) a steam reforming type reformer for obtaining products of mainly hydrogen by treating a heated and vaporized fuel and steam with a catalyst such as copper, nickel, platinum, ruthenium and the like;
(2) a partial oxidation type reformer for obtaining products of mainly hydrogen by treating a heated and vaporized fuel and air with or without a catalyst such as copper, nickel, platinum, ruthenium and the like; and
(3) an auto thermal reforming type reformer for obtaining products of mainly hydrogen by treating a heated and vaporized fuel, steam and air, which carries out the partial oxidation of (2) in the prior stage and carries out the steam reforming of (1) in the posterior stage while using the generated heat of the partial oxidation reaction with a catalyst such as copper, nickel, platinum, ruthenium and the like.

The carbon monoxide conversion apparatus is an apparatus for removing carbon monoxide which is contained in a gas produced by the above-described reformer and becomes a catalyst poison in a fuel cell and practical examples thereof are:
(1) a water gas shift reactor for obtaining carbon dioxide and hydrogen as products from carbon monoxide and steam by reacting a reformed gas and steam in the presence of a catalyst of such as copper, nickel, platinum, ruthenium and the like; and
(2) a preferential oxidation reactor for converting carbon monoxide into carbon dioxide by reacting a reformed gas and compressed air in the presence of a catalyst of such as platinum, ruthenium and the like, and these are used singly or jointly.

As a fuel cell, practical examples are a proton exchange membrane type fuel cell (PEFC), a phosphoric acid type fuel cell (PAFC), a molten carbonate type fuel cell (MCFC), a solid oxide type fell cell (SOFC) and the like.

As for the examples of the fuel cell system to which the present invention can be applied, they include a stationary fuel cell system which is mainly designed to be used for the generation of electrical energy, a movable fuel cell system which is mainly designed to be used as a power source for a vehicle (so-called fuel cell powered vehicle), etc.

In the case of the stationary fuel cell system, it is possible to use a cogeneration system for effectively utilizing the heat generated in the fuel cell system. Therefore, this stationary fuel cell system is now widely studied to make it into a big size so as to enable it to be utilized in a factory, or into a small size so as to enable it to be utilized at home.

With respect to the kind of the fuel cell system to which this dual purpose fuel can be fed, there is not any particular limitation, i.e. they may be either a fuel cell powered vehicle or a stationary fuel cell system. As for the stationary fuel cell system, it is particularly useful if the stationary fuel cell system is installed at a service station.

Further, it is not necessary to provide a service station with a fuel tank which is exclusively designed for use in a stationary fuel cell system. Namely, this dual purpose fuel can be introduced into the conventional gasoline tank, thereby enabling the fuel to be supplied not only for an automotive spark ignition (SI) engine but also for a fuel cell system.

### Examples

The properties of base materials used for the respective fuels for examples and comparative examples are shown in Table 4.

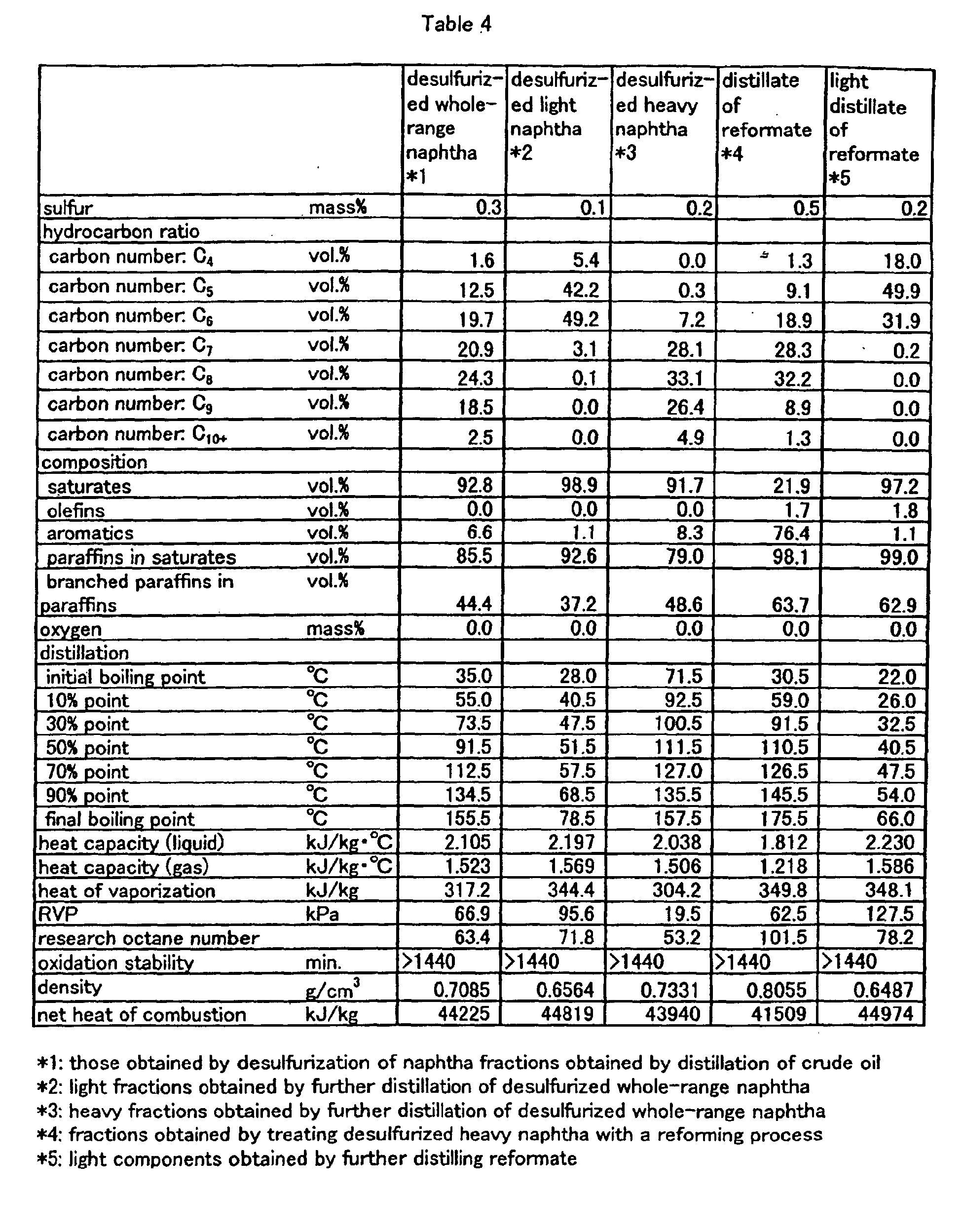

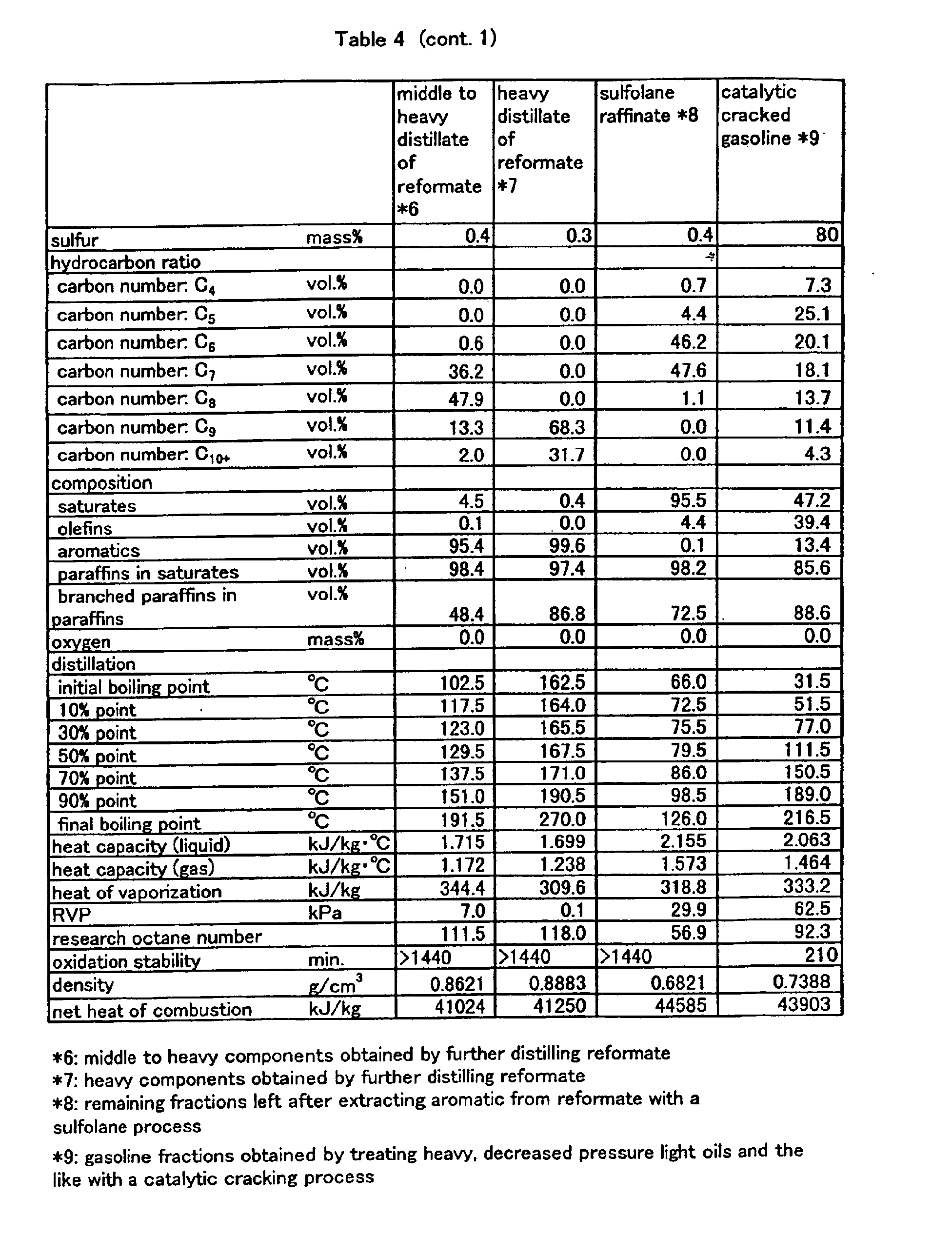

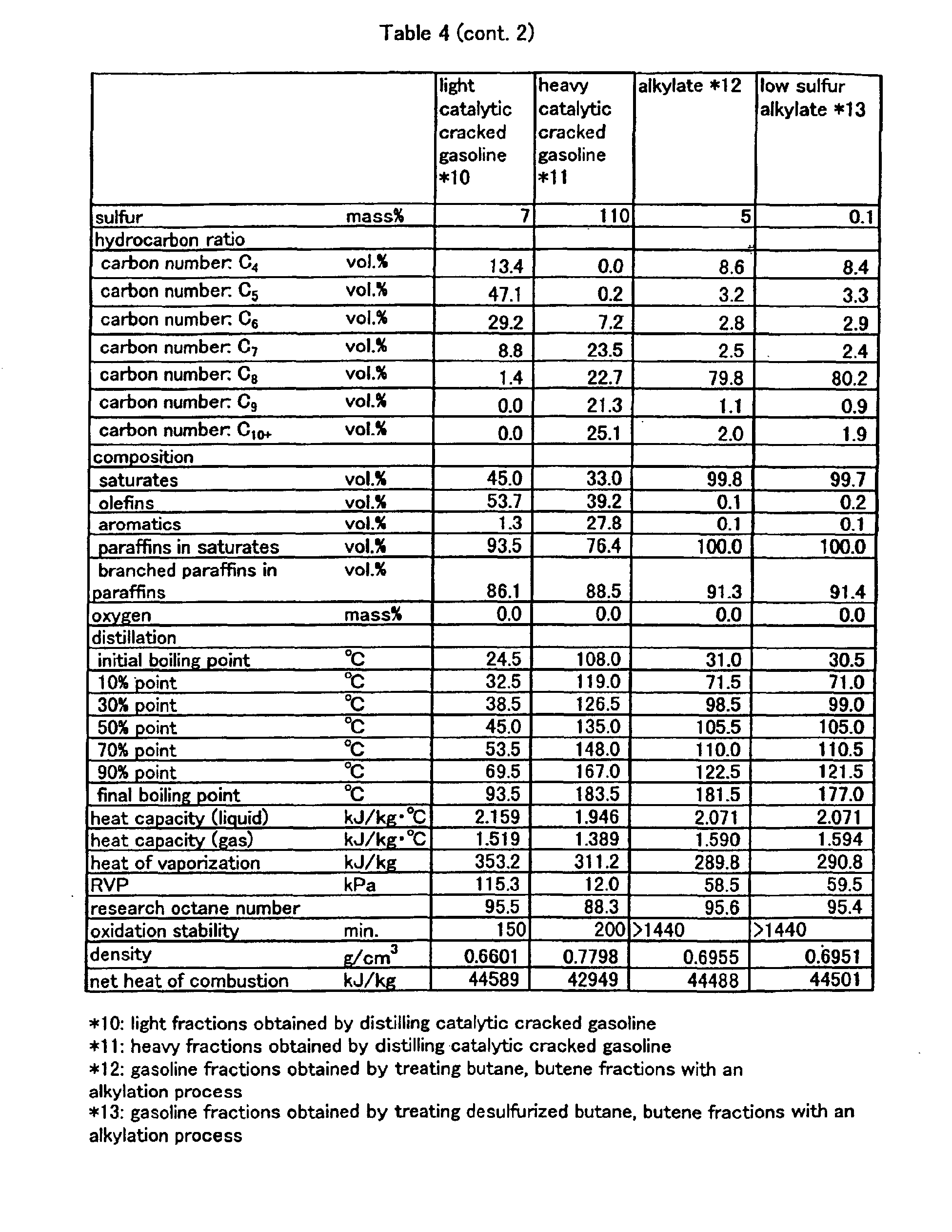

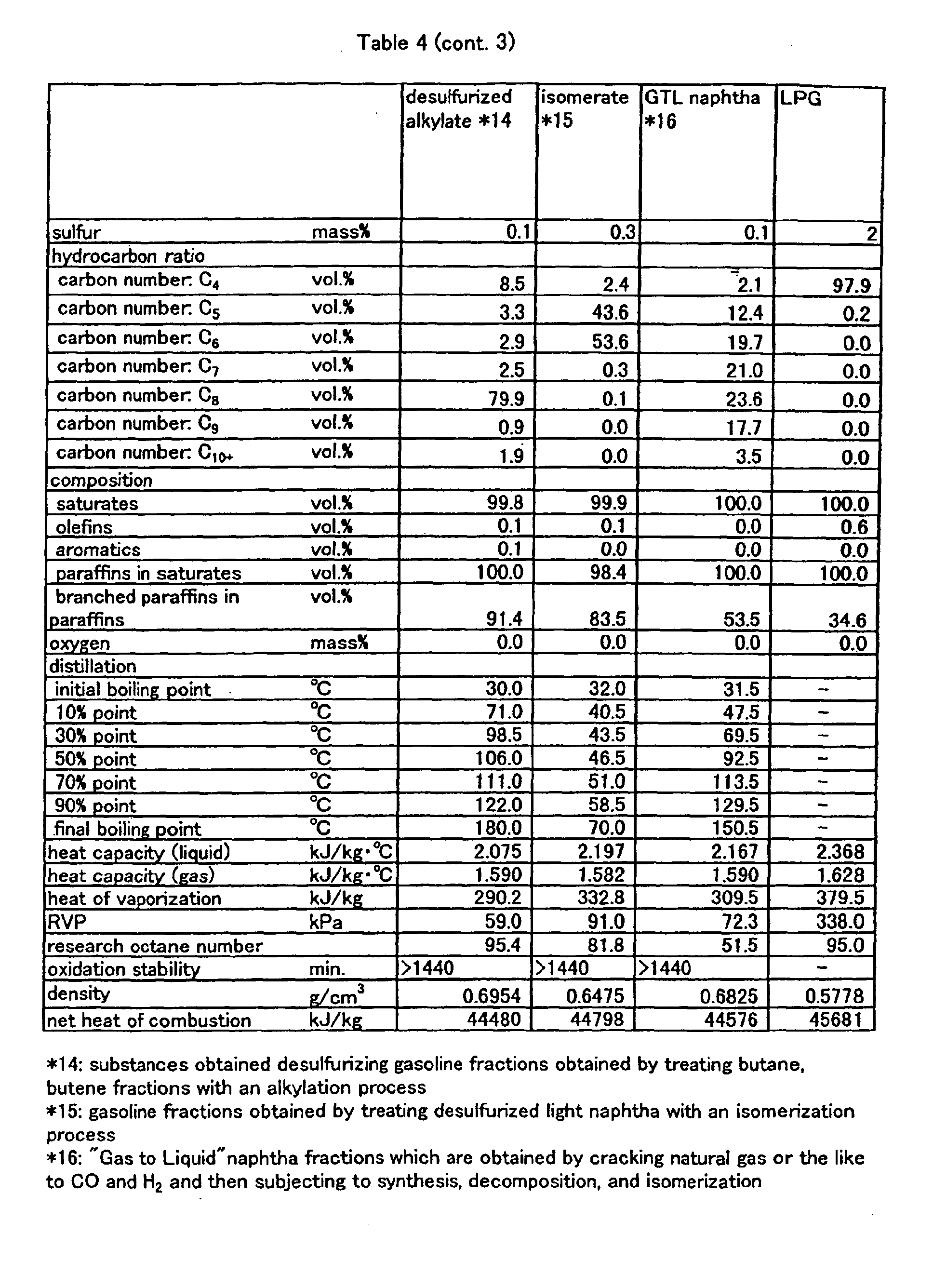

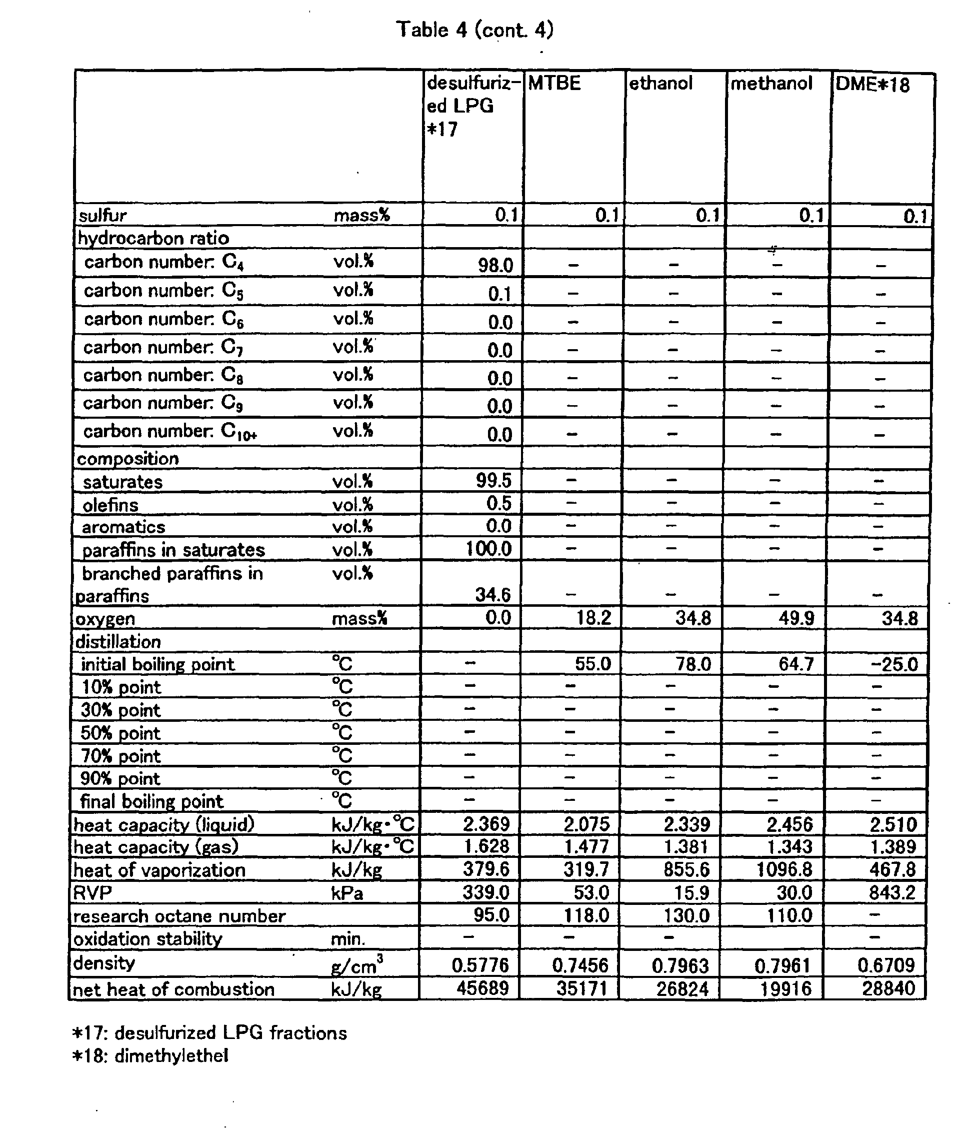

Also, the properties of the respective fuels used for examples and comparative examples are shown in Table 5.

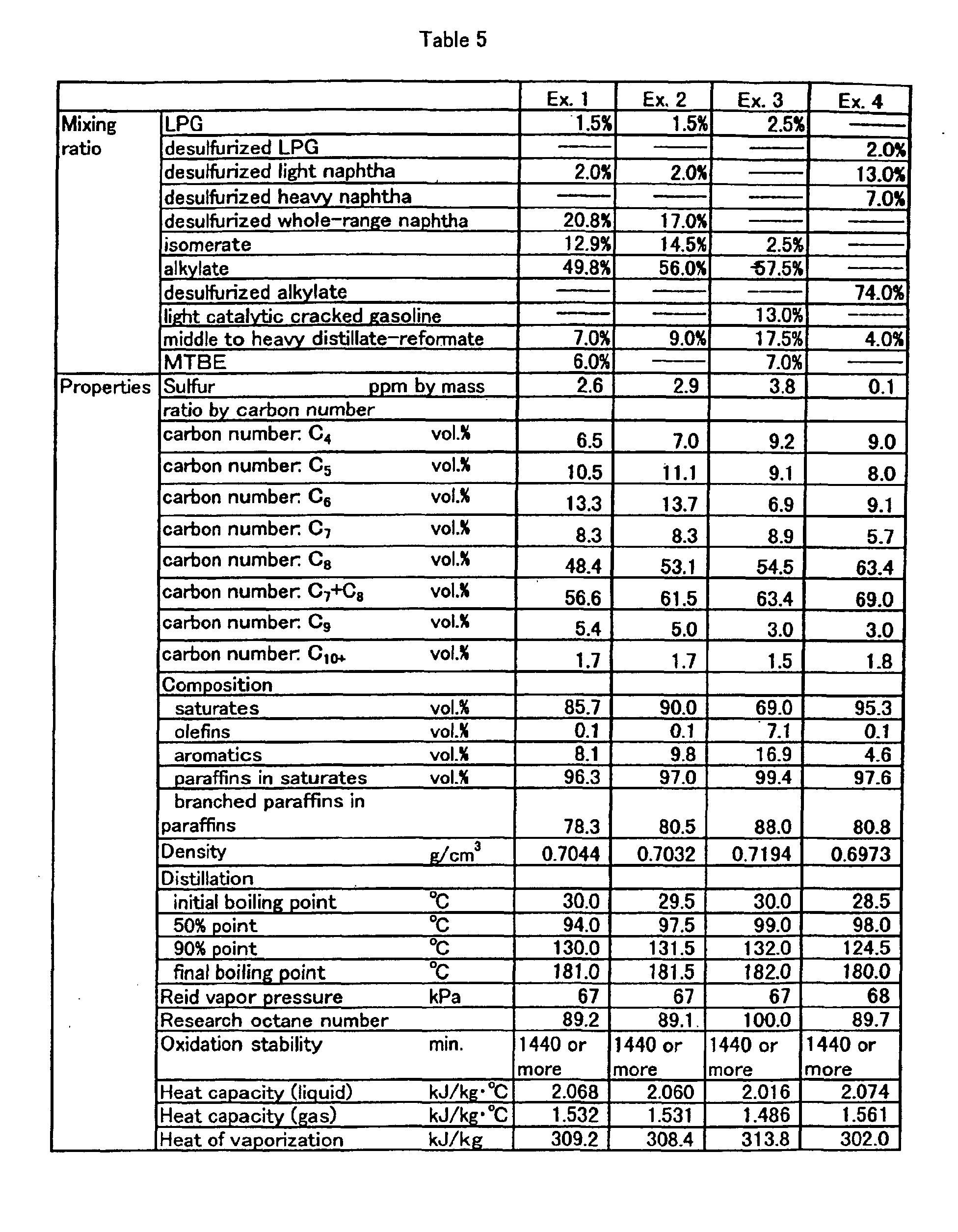

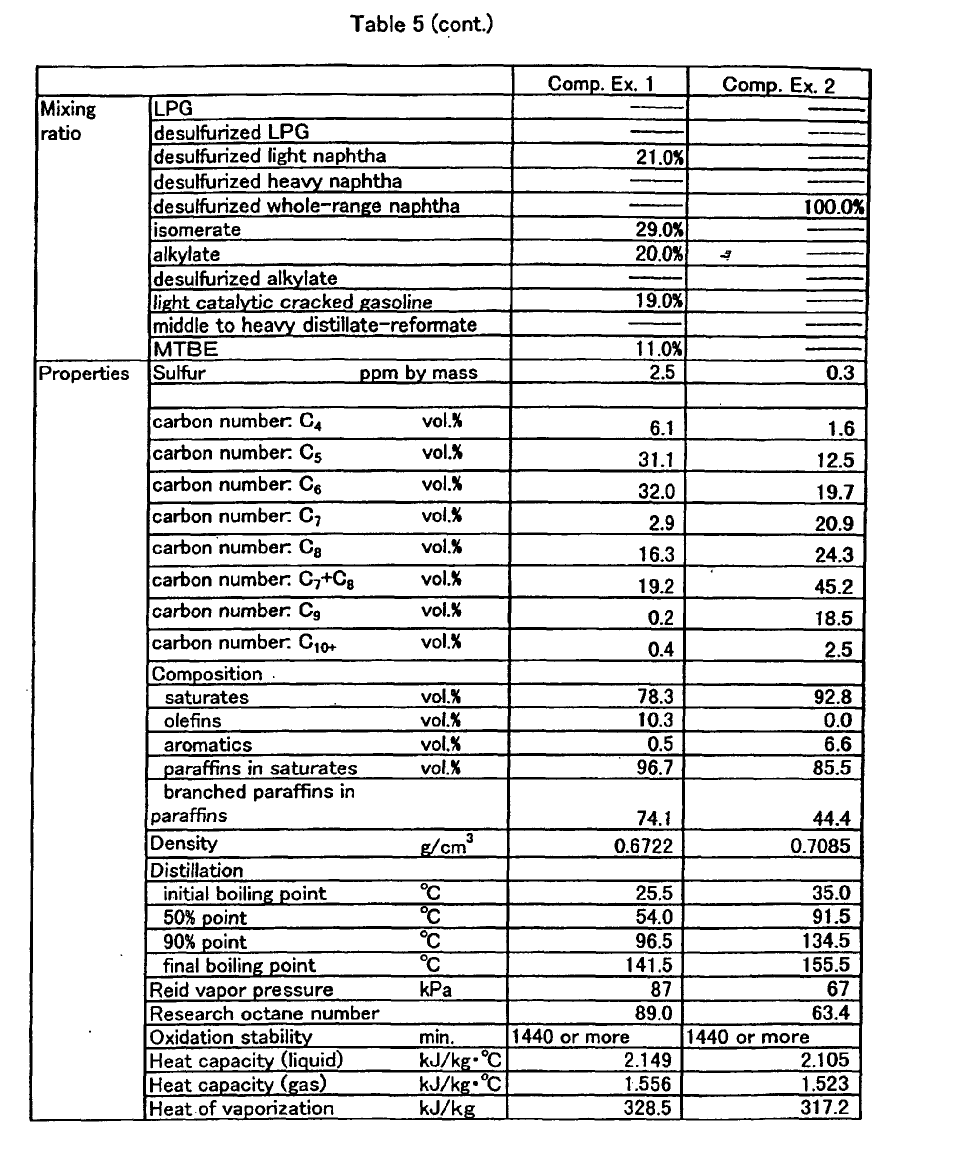

These respective fuels were subjected to a fuel cell system evaluation test and an automotive spark ignition (SI) engine evaluation test.

### Fuel cell system evaluation test

### (1) Steam reforming

A fuel and water were evaporated by electric heating and led to a reformer filled with a noble metal type catalyst and kept at a prescribed temperature by an electric heater to generate a reformed gas enriched with hydrogen.

The temperature of the reformer was adjusted to be the minimum temperature (the minimum temperature at which no THC was contained in a reformed gas) at which reforming was completely carried out in an initial stage of the test.

Together with steam, a reformed gas was led to a carbon monoxide conversion apparatus (a water gas shift reaction) to convert carbon monoxide in the reformed gas to carbon dioxide and then the produced gas was led to a solid polymer type fuel cell to carry out power generation.

A flow chart of a steam reforming type fuel cell system used for the evaluation was illustrated in Fig. 1.

### (2) Partial oxidation

A fuel is evaporated by electric heating and together with air, the evaporated fuel was led to a reformer filled with a noble metal type catalyst and kept at a 1100 °C by an electric heater to generate a reformed gas enriched with hydrogen.

Together with steam, a reformed gas was led to a carbon monoxide conversion apparatus (a water gas shift reaction) to convert carbon monoxide in the reformed gas to carbon dioxide and then the produced gas was led to a solid polymer type fuel cell to carry out power generation.

A flow chart of a partial oxidation type fuel cell system used for the evaluation was illustrated in Fig. 2.

### (3) Evaluation method

The amounts of H₂, CO, CO₂ and THC in the reformed gas generated from a reformer were measured immediately after starting of the evaluation test. Similarly, the amounts of H₂, CO, CO₂ and THC in the reformed gas generated from a carbon monoxide conversion apparatus were measured immediately after starting of the evaluation test.

The power generation quantity, the fuel consumption, and the CO₂ amount emitted out of a fuel cell were measured immediately after starting of the evaluation test and 100 hours later from the starting.

The energy (preheating quantities) necessary to heat the respective fuels to a prescribed reforming temperature were calculated from the heat capacities and the heat of vaporization.

Further, these measured values, calculated values and the heating values of respective fuels were used for calculation of the performance deterioration ratio of a reforming catalyst (the power generation amount after 100 hours later from the starting divided by the power generation amount immediately after the starting), the thermal efficiency (the power generation amount immediately after the starting divided by the net heat of combustion of a fuel), and the preheating energy ratio (preheating energy divided by the power generation amount).

Assessment tests as a fuel for an automotive spark ignition (SI) engine:

The driveability of the fuel was evaluated wherein an automobile is driven in accordance with the driving pattern based on the CRC method stipulated in "CRC Report No. 483". The contents of the assessment are determined in such a manner that, based on a demerit assessment point to be given to any one of the phenomena described in the assessment items shown in Table 1 by referring to the degrees of phenomena described in Table 2 and also based on a factor prescribed for each of the assessments which are described in Table 3, a value of "the assessment point" x "the factor" is calculated. This calculation is performed on all of the items stipulated therein, and all of the results are finally summarized, thus evaluating the driveability of the fuel.

Table 6 show each of the values measured, the values calculated, and the assessment points.

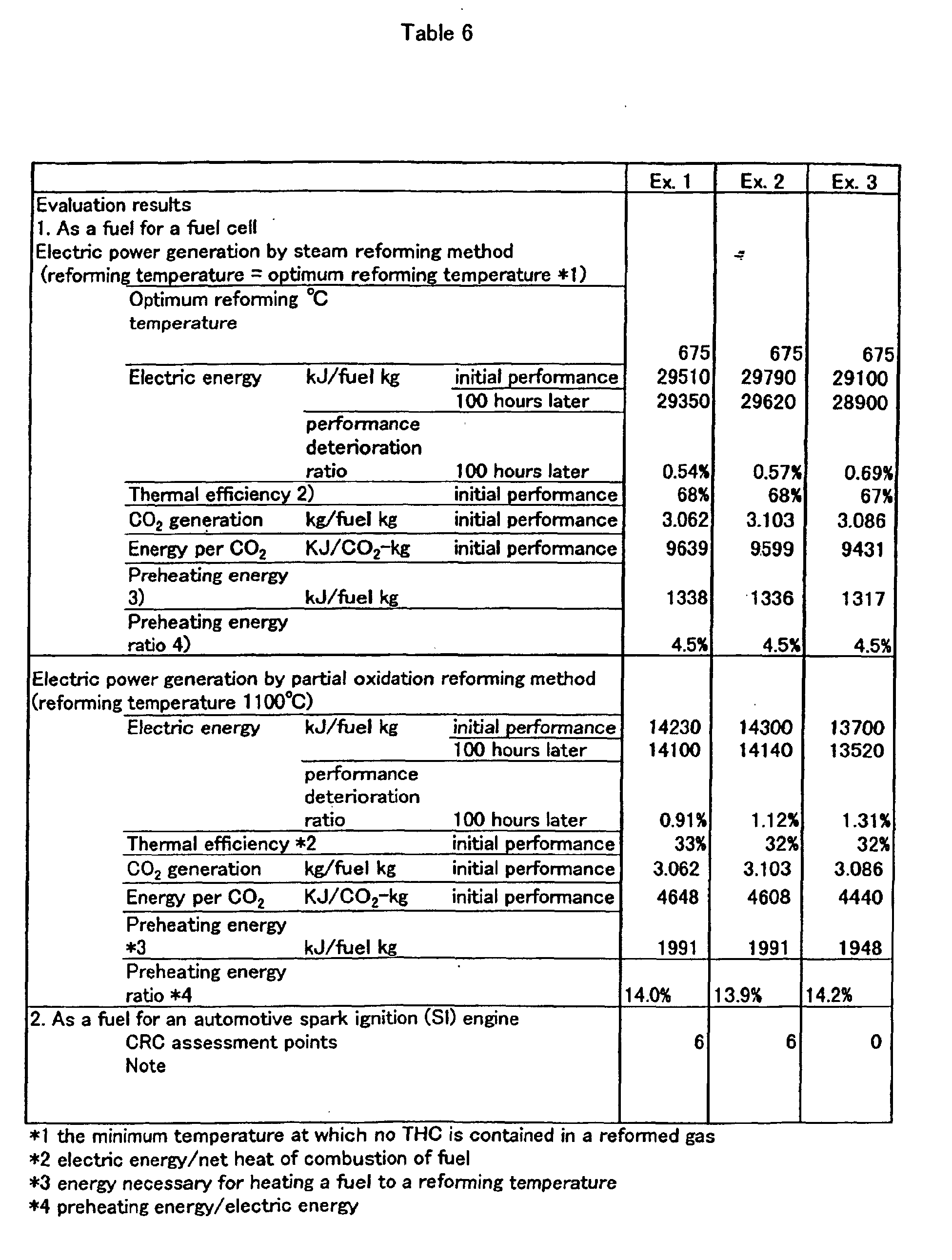

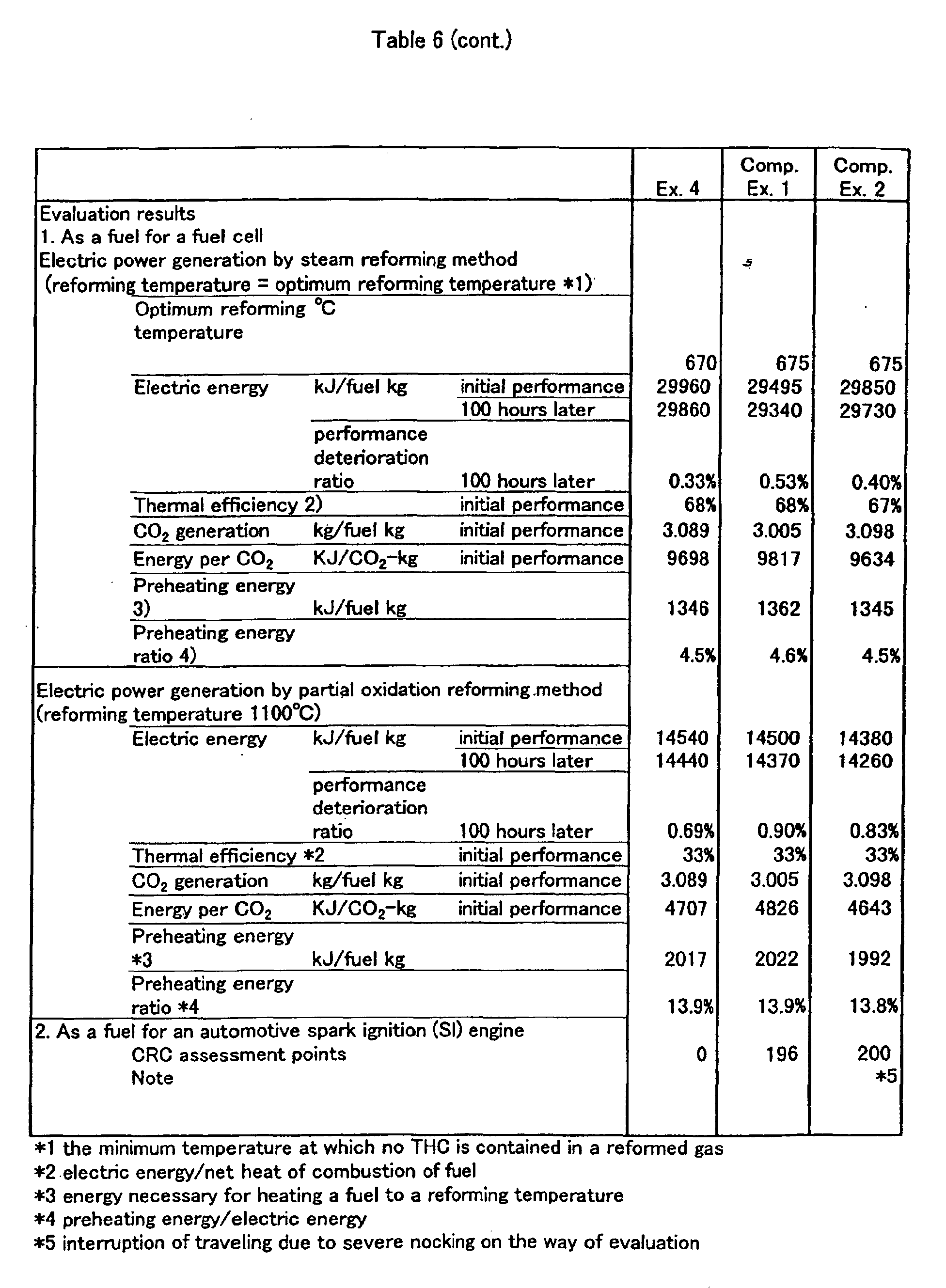

### Industrial Applicability

As described above, when the dual purpose fuel which is formed of hydrocarbon compounds having a specific composition and specific properties and is useful for both an automotive spark ignition (SI) engine and fuel cell system is used as a fuel for a fuel cell, it will be found possible to obtain a high output of electric energy which is minimal in performance degradation, and to concurrently satisfy all of the properties required for the fuel to be used for the fuel cell. Moreover, since this dual purpose fuel can be stored in an existing fuel storage apparatus constructed for feeding fuel for an automotive spark ignition (SI) engine and this dual purpose fuel is enabled to be fed not only for an automotive spark ignition (SI) engine but also for a fuel cell system, as demanded, from this single fuel storage apparatus, it is no longer necessary to additionally provide a service station with a fuel tank which is exclusively designed for use in a fuel cell system. Namely, this dual purpose fuel can be stored in the conventional gasoline tank, thereby enabling the fuel to be fed not only for an automotive spark ignition (SI) engine but also for a fuel cell system.

## Claims

1. A dual purpose fuel for use in both an automotive spark ignition (SI) engine and a fuel cell system wherein said fuel comprises hydrocarbons of 50ppm by mass or less of sulfur content; 30 vol.% or more of saturates; 50 vol.% or less of aromatics; and 35 vol.% or less of olefins; wherein the ratio of paraffin in said saturates is 60 vol.% or more; the ratio of branched paraffin in said paraffin is 70 vol.% or more; the density of said hydrocarbons is 0.78 g/cm³ or less; the initial boiling point in distillation is 24 °C or higher and 80 °C or lower, the 50 vol.% distillation temperature (T₅₀) is 60 °C or higher and 120 °C or lower, the 90 vol.% distillation temperature (T₉₀) is 100 °C or higher and 190 °C or lower, the final boiling point in distillation is 130 °C or higher and 230 °C or lower; the Reid vapor pressure of said hydrocarbons is 10kPa or more and less than 100kPa; and the research octane number of said hydrocarbons is 89.0 or more.

2. A dual purpose fuel for use in both an automotive spark ignition (SI) engine and a fuel cell system according to claim 1, wherein said fuel exhibits total weighted demerits (TWD) of 40 or less based on the driveability assessment method at the intermediate temperature of CRC.

3. A dual purpose fuel for use in both an automotive spark ignition (SI) engine and a fuel cell system according to claim 1 or 2, wherein said content of hydrocarbon compounds having four carbon atoms is 15 vol.% or less, the content of hydrocarbon compounds having five carbon atoms is 5 vol.% or more, the content of hydrocarbon compounds having six carbon atoms is 5 vol.% or more, a total content of hydrocarbon compounds having seven and eight carbon atoms is 20 vol.% or more, and the content of hydrocarbon compounds having ten or more carbon atoms is 20 vol.% or less.

4. A dual purpose fuel for use in both an automotive spark ignition (SI) engine and a fuel cell system according to any one of claims 1 to 3, wherein heat capacity of the fuel is 2.6 kJ/kg °C or less at 15 °C and 1 atm in liquid phase.

5. A dual purpose fuel for use in both an automotive spark ignition (SI) engine and a fuel cell system according to any one of claims 1 to 4, wherein heat of vaporization is 400 kJ/kg or less.

6. A dual purpose fuel for use in both an automotive spark ignition (SI) engine and a fuel cell system according to any one of claims 1 to 5, wherein oxidation stability of the fuel is 240 minutes or longer.

7. A storage and/or supply system of the dual purpose fuel, wherein said dual purpose fuel according to any one of claims 1 to 6 is stored in a fuel storage apparatus for an automotive spark ignition (SI) engine, and fed, as demanded, to the automotive spark ignition (SI) engine or to the fuel cell system from the fuel storage apparatus.

8. A storage and/or supply system of the dual purpose fuel according to claim 7, wherein said fuel storage apparatus is formed of the existing storage apparatus for storing high-octane gasoline or regular gasoline.
